# EUROPÄISCHE PATENTANMELDUNG

(11) **EP 4 697 575 A1**
(43) Veröffentlichungstag der Anmeldung: **18.02.2026**
(21) Anmeldenummer: 24194009.7
(22) Anmeldetag: 12.08.2024
(51) Int. Cl.: H02M 1/00, H02M 3/04, H02M 3/24, H02M 7/44

(54) **ANTRIEBSEINHEIT FÜR EINE HANDWERKZEUGMASCHINE UND HANDWERKZEUGMASCHINE**

(71) Anmelder: Hilti Aktiengesellschaft, 9494 Schaan (LI)
(72) Erfinder: Rehorik, Kilian, 97082 Würzburg (DE); Dotz, Boris, 86937 Scheuring (DE); Scherbaum, Markus, 86853 Gennach (DE); Lacher, Michael, 86830 Schwabmünchen (DE); Steentjes, Simon, 86807 Buchloe (DE); Asmus, Torsten, 87600 Kaufbeuren (DE); Hurka, Florian, 86459 Margertshausen (DE); Deisling, Markus, 86836 Untermeitingen (DE); Ruff, Christian, 86391 Stadtbergen (DE); Gerold, Johannes, 82418 Murnau (DE)
(74) Vertreter: Hilti Aktiengesellschaft Corporate Intellectual Property

(57) **Zusammenfassung**

Es wird eine Antriebseinheit für eine Handwerkzeugmaschine vorgeschlagen, aufweisend: eine Spannungsquelle; einen DC/DC-Wandler, der parallel zu der Spannungsquelle verschaltet ist, und dazu eingerichtet ist, eine von der Spannungsquelle bereitgestellte eingangsseitige Gleichspannung in eine ausgangsseitige, insbesondere geglättete, Gleichspannung umzuwandeln; eine Leistungselektronik, die parallel zu der Spannungsquelle und dem DC/DC-Wandler geschaltet ist und durch die ausgangsseitige Gleichspannung betreibbar ist; und
einen Elektromotor, der mit der Leistungselektronik verschaltet ist, wobei die Leistungselektronik dazu ausgebildet ist, den Elektromotor auf Basis der ausgangsseitigen Gleichspannung zu steuern und/oder anzutreiben.

## Beschreibung

### GEBIET DER ERFINDUNG

Die vorliegende Erfindung betrifft eine Antriebseinheit für eine Handwerkzeugmaschine und eine Handwerkzeugmaschine mit einer solchen Antriebseinheit.

Eine Leistungselektronik zur Steuerung eines elektrischen Motors in einer Handwerkzeugmaschine wird mit einer Gleichspannung versorgt, die oftmals von einer Batterie oder einem Gleichrichter bereitgestellt wird. Die Steuerung des elektrischen Motors durch die Leistungselektronik funktioniert dabei am störungsärmsten, wenn diese Gleichspannung zeitlich konstant und stabil ist.

Es kann jedoch im Betrieb zu Spannungseinbrüchen oder zu Spannungsschwankungen zwischen der Spannungsquelle und der Leistungselektronik kommen. In herkömmlichen leistungselektronischen Designs ist zur Kompensation von Schwankungen ein Kondensator in einem Gleichspannungs-Zwischenkreis montiert, insbesondere nahe einem aktiven Teil der Leistungselektronik, um die Versorgungsspannung zu stabilisieren.

Diese Gleichspannungs-Zwischenkreiskapazität umfasst normalerweise einen oder mehrere Kondensatoren, die Bauraum beanspruchen und aufgrund des verwendeten Kondensatormaterials erhebliche Kosten verursachen. Selbst mit einer üblichen Menge an Gleichspannungs-Zwischenkreiskapazitäten können Störungen auf der Gleichspannungsversorgungsseite weiterhin eine schwankende Spannung am Eingang der Leistungselektronik verursachen, was den Betrieb der Handwerkzeugmaschine negativ beeinflusst.

Für eine bessere Qualität der durch die Leistungselektronik bereitgestellten Motorsteuerung ist es daher wünschenswert, ein konstantes, stabiles Spannungsniveau am Eingang der Leistungselektronik zu erwirken. Um Kosten und Platz zu sparen, ist es ferner wünschenswert, die erforderliche Gleichspannungs-Zwischenkreiskapazität auf ein minimal notwendiges Maß zu reduzieren. Daher ist eine technische Lösung gewüscht, die die Spannungsversorgung verbessert, ohne eine zusätzliche Gleichspannungs-Zwischenkreiskapazität zu benötigen und diese zumindest zu reduzieren.

Vor diesem Hintergrund besteht die Aufgabe der vorliegenden Erfindung, eine verbesserte Antriebseinheit für eine Handwerkzeugmaschine und/oder eine verbesserte Handwerkzeugmaschine zu schaffen.

### OFFENBARUNG DER ERFINDUNG

Gemäß einem ersten Aspekt wird eine Antriebseinheit für eine Handwerkzeugmaschine vorgeschlagen. Die Antriebseinheit weist eine Spannungsquelle (auch Hauptversorgung der Antriebseinheit genannt) und einen DC/DC-Wandler (auch Gleichstromwandler genannt) auf, der parallel zu der Spannungsquelle verschaltet ist, und dazu eingerichtet ist, eine von der Spannungsquelle bereitgestellte, eingangsseitige Gleichspannung (auch Eingangsspannung genannt) in eine ausgangsseitige, insbesondere geglättete bzw. konstante, Gleichspannung (auch Ausgangsspannung genannt) umzuwandeln. Die Antriebseinheit weist ferner eine Leistungselektronik, die parallel zu der Spannungsquelle und dem DC/DC-Wandler geschaltet ist und durch die ausgangsseitige Gleichspannung betreibbar ist; und einen Elektromotor auf, der mit der Leistungselektronik verschaltet ist. Die Leistungselektronik ist dazu ausgebildet, den Elektromotor auf Basis der ausgangsseitigen Gleichspannung zu steuern und/oder anzutreiben. Die ausgangsseitigen Gleichspannung versorgt dabei vorzugsweise die Leistungselektronik und dadurch den Elektromotor mit elektrischer Antriebsleistung.

Durch die Einführung des DC/DC-Wandlers in Parallelschaltung zwischen der Spannungsquelle und der Leistungselektronik kann eine stabile, konstante Spannung für die Leistungselektronik mit weniger oder sogar ohne Gleichstrom-Zwischenkreiskapazität bereitgestellt werden. Der DC/DC-Wandler regelt vorzugsweise eine Eingangsspannung, die von der Spannungsquelle bereitgestellt wird, auf eine konstante Ausgangs-Gleichspannung, die am Eingang der Leistungselektronik bereitgestellt wird. Der DC/DC-Wandler wandelt die Eingangsspannung dabei vorzugsweise auf einen konstanten, stabilen Spannungswert, der für den Betrieb der durch die Leistungselektronik bereitgestellten Motorsteuerung geeignet ist. Ein konstantes Spannungsniveau kann so auch ohne Zwischenkreiskapazitäten oder zumindest mit einer reduzierten Zwischenkreiskapazität erreicht werden. Hierdurch können Material und Kosten eingespart werden.

Gemäß einem zweiten Aspekt wird eine Handwerkzeugmaschine mit einer derartigen Antriebseinheit vorgeschlagen.

Die Handwerkzeugmaschine ist vorzugsweise als eine Bohrmaschine, ein Schlagbohrer, ein Bohrhammer, eine Handkreissäge, eine Stichsäge, eine Säbelsäge, ein Trennschleifer, ein Rührwerk oder dergleichen ausgebildet. Bevorzugt kann die Handwerkzeugmaschine bzw. das Elektrowerkzeug akkubetrieben sein und einen oder mehrere, insbesondere auch wechselbare, Akkus, beispielsweise eine Lithium-Ionen-Batterie, aufweisen.

Die für die Antriebseinheit gemachten Ausführungen gelten für die Handwerkzeugmaschine entsprechend und umgekehrt.

In einer Ausführungsform wird vorgeschlagen, dass der DC/DC-Wandler einen Buck-Wandler und/oder eine Boost-Wandler und/oder einen Buck-Boost-Wandler und/oder einen Cuk-Wandler und/oder einen SEPIC-Wandler und/oder einen Flyback-Wander und/oder Push-Pull-Wandler und/oder ein eine aktive H-Brücke umfassenden DC/DC-Wandler aufweist.

Ein DC/DC-Wandler ist vorzugsweise eine elektronische Schaltung, die eine Gleichspannung (DC) von einer Spannungsstufe in eine andere Spannungsstufe umwandeln. Es gibt verschiedene Arten von DC/DC-Wandlern, die sich in ihrem Aufbau und ihrer Funktionsweise unterscheiden. Ein Buck-Wandler (Abwärtswandler) weist mindestens einen Schalter (Transistor), eine Diode, eine Induktivität (Spule) und einen Kondensator auf, und ist vorzugsweise dazu ausgebildet, eine Eingangsspannung auf eine niedrigere Ausgangsspannung abzusenken. Der Schalter wird vorzugsweise mit einer bestimmten Frequenz ein- und ausgeschaltet, wodurch die Energie in der Induktivität gespeichert und dann an den Ausgang abgegeben wird. Ein Boost-Wandler (Aufwärtswandler) weist mindestens einen Schalter, eine Diode, eine Induktivität und einen Kondensator auf, und ist vorzugsweise dazu ausgebildet, eine Eingangsspannung auf eine höhere Ausgangsspannung zu erhöhen. Wenn der Schalter geschlossen ist, wird vorzugsweise Energie in der Induktivität gespeichert. Wenn der Schalter öffnet, wird die gespeicherte Energie vorzugsweise durch die Diode an den Ausgang abgegeben. Ein Buck-Boost-Wandler weist vorzugsweise eine Kombination von Buck- und Boost-Wandlerkomponenten auf. Dies kann mindestens einen Schalter, eine Diode, eine Induktivität und einen Kondensator umfassen. Der Buck-Boost-Wandler ist vorzugsweise dazu ausgebildet, die Eingangsspannung entweder zu erhöhen oder zu verringern, je nach den Anforderungen der Last. Die Ausgangsspannung kann größer oder kleiner als die Eingangsspannung sein. Ein Cuk-Wandler weist mindestens zwei Induktivitäten, zwei Kondensatoren, einen Schalter und eine Diode auf, und ist vorzugsweise dazu ausgebildet, die Eingangsspannung zu erhöhen oder zu verringern und hat den Vorteil eines kontinuierlichen Eingangs- und Ausgangsstroms, was weniger Welligkeit bedeutet. Ein SEPIC-Wandler (Single-Ended Primary Inductor Converter) weist mindestens zwei Induktivitäten, einen Schalter, zwei Kondensatoren und eine Diode auf, und ist vorzugsweise ähnlich wie der Cuk-Wandler dazu ausgebildet, die Eingangsspannung zu erhöhen oder zu verringern und bietet eine galvanische Trennung zwischen Eingang und Ausgang. Ein Flyback-Wandler weist mindestens einen Schalter, eine Diode, eine Induktivität mit mehreren Wicklungen (Transformator) und einen Kondensator auf, bietet eine galvanische Trennung und kann eine Eingangsspannung in mehrere Ausgangsspannungen umwandeln. Ein Push-Pull-Wandler weist einen Transformator mit Mittelanzapfung, zwei Schalter und zwei Dioden und bietet vorzugsweise eine hohe Effizienz. Der Transformator sorgt für eine galvanische Trennung und kann mehrere Ausgangsspannungen liefern. Ein DC/DC-Wandler mit einer aktiven H-Brücke ist eine Schaltung, die Gleichspannung von einem Spannungspegel auf einen anderen konvertiert. Die aktive H-Brücke ist dabei vorzugsweis eine spezielle Schaltungsanordnung, die aus vier oder mehr Schaltern (z.B. MOSFETs und/oder IGBTs) besteht und die Richtung des Stroms durch die Last umkehren kann. Dies ermöglicht eine effiziente Spannungswandlung und wird oft in Anwendungen verwendet, bei denen eine präzise Regelung und hohe Effizienz erforderlich sind. Vorliegend kann der DC/DC-Wandler auch mit einer Halb-H-Brücke, die mindestens zwei Schalter (z.B. MOSFETs und/oder IGBTs) aufweist, ausgebildet sein.

In einer Ausführungsform wird vorgeschlagen, dass die Antriebseinheit einen Gleichstromkondensator aufweist, der zwischen dem DC/DC-Wandler und der Leistungselektronik angeordnet ist, und in Parallelschaltung mit dem DC/DC-Wandler und der Leistungselektronik verschaltet ist.

Die Antriebseinheit kann auch mehrere Gleichstromkondensatoren aufweisen, die jeweils parallel zu dem DC/DC-Wandler und der Leistungselektronik geschaltet sind. Durch den zusätzlichen Gleichstromkondensator, der als Zwischenkreiskondensator ausgebildet ist, kann eine weitere Stabilisierung der Ausgangsspannung des DC/DC-Wandlers erreicht werden, so dass vorzugsweise ggf. bestehende Spannungs-Ripple aus der bereits stabilisierten, konstanten Ausgangsspannung des DC/DC-Wandlers entfernt werden können. Spannungs-Rippel, auch als Rippel bezeichnet, sind unerwünschte Schwankungen oder Welligkeiten in der Ausgangsspannung einer DC/DC-Wandler-Schaltung. Diese Schwankungen resultieren aus der Wechselstromkomponente, die überlagert wird, und können die Folge der Schaltvorgänge im DC/DC-Wandler sein.

In einer Ausführungsform wird vorgeschlagen, dass die Spannungsquelle durch mindestens zwei Kontakte, die mit mindestens einer Akkueinheit verbindbar sind, bereitgestellt ist.

Die Spannungsquelle ist vorzugsweise dazu ausgebildet, eine Gleichspannung (DC) zu liefern. Die Spannungsquelle bildet vorzugsweise einen wesentlichen Bestandteil der Antriebseinheit und wird zur Energieversorgung des Elektromotors verwendet. Die Spannungsquelle weist vorzugsweise mindestens zwei oder mehr Kontakte bzw. Kontaktpunkte auf. Diese Kontakte sind vorzugsweise Verbindungspunkte, über die die elektrische Energie von der Akkueinheit an die Antriebseinheit übertragen wird. Die Kontakte der Spannungsquelle sind vorzugsweise so gestaltet, dass sie mit mindestens einer Akkueinheit verbunden werden können. Die Akkueinheit ist vorzugsweise ein wiederaufladbarer Energiespeicher, der elektrische Energie speichern und bei Bedarf wieder abgeben kann. Die Anordnung oder Konstruktion stellt sicher, dass die Spannungsquelle, durch die oben genannten Kontakte und deren Verbindungsmöglichkeiten mit der Akkueinheit, zuverlässig und effizient funktioniert.

In einer Ausführungsform wird vorgeschlagen, dass die Spannungsquelle ein Anschlussterminal aufweist, das einen AC/DC-Wandler umfasst, der dazu eingerichtet ist, eine netzseitige Wechselspannung in eine Gleichspannung umzuwandeln.

Das Anschlussterminal ist vorzugsweise ein Verbindungs- oder Anschlusspunkt an der Spannungsquelle, über den die Spannungsquelle mit anderen Komponenten oder einer externen Energiequelle verbindbar ist. Der AC/DC-Wandler ist ein elektrisches Bauteil oder eine Schaltung, die dazu eingerichtet ist, eine Wechselspannung (AC) in eine Gleichspannung (DC) umzuwandeln. Der Wandler ist vorzugsweise in das Anschlussterminal integriert oder mit diesem verbunden. Eine netzseitige Wechselspannung ist vorzugsweise eine Wechselspannung, die von einem externen Stromnetz bereitgestellt wird, typischerweise mit standardisierten Spannungs- und Frequenzwerten (z.B. 230V, 50Hz in Europa).

In einer Ausführungsform wird vorgeschlagen, dass der DC/DC-Wandler eine Regelbandbreite von mindestens 80 kHz, vorzugsweise von mindestens 100 kHz aufweist.

Der DC/DC-Wandler hat vorzugsweise eine Fähigkeit zur Regelung der Ausgangsspannung über einen bestimmten Frequenzbereich. Die Mindestanforderung ist 80 kHz. Die bevorzugte Anforderung ist 100 kHz. Der DC/DC-Wandler kann dadurch schnell und präzise auf Änderungen der Eingangsbedingungen oder der Lastanforderungen reagieren, was durch die Regelbandbreite bestimmt wird. Durch die hohe Regelbandbreite wird eine bessere Leistung und Stabilität des Wandlers gewährleistet, da der DC/DC-Wandler schneller auf Störungen reagieren kann. Der DC/DC-Wandler soll in der Lage sein, seine Ausgangsspannung stabil zu halten, auch wenn es zu schnellen Änderungen in den Betriebsbedingungen kommt. Diese Merkmale sind besonders vorteilhaft in Anwendungen mit hohen Anforderungen an die Regelung und Stabilität, wie vorliegend in der Leistungselektronik.

In einer Ausführungsform wird vorgeschlagen, dass der DC/DC-Wandler mindestens einen halbleiterbasierten Schalter aufweist, der ein Halbleitermaterial umfasst, das einen Bandabstand bzw. eine Bandlücke von mindestens zwei Elektronenvolt (2 eV) aufweist.

Vorzugsweise weist der DC/DC-Wandler mindestens zwei Schalter auf. Der Bandabstand (auch als Bandlücke bezeichnet) ist vorzugsweise die Energie, die erforderlich ist, um ein Elektron aus dem Valenzband in das Leitungsband eines Halbleitermaterials zu fördern. Als Halbleitermaterialien kommen beispielsweise Beta-Galliumoxid (β-Ga₂O₃), Gallium-Nitrid (GaN) oder Siliziumkarbid (SiC) zum Einsatz. Beta-Galliumoxid (β-Ga₂O₃) hat einen Bandabstand von etwa 4,8 bis 4,9 eV. Beta-Galliumoxid ist ein ultrabreitbandiger Halbleiter, der für Hochspannungs- und Hochleistungselektronik verwendet wird. Gallium-Nitrid (GaN) hat einen Bandabstand von etwa 3,4 eV. Gallium-Nitrid ist ein Halbleiter für Hochfrequenz- und Hochleistungselektronik. Siliziumkarbid (SiC) hat einen Bandabstand von etwa 2,3 bis 3,3 eV, abhängig von der Polytypstruktur (z.B. 4H-SiC, 6H-SiC). Siliziumkarbid ist bekannt für seine hervorragende thermische und elektrische Leistung und wird häufig in Leistungselektronik und Hochtemperaturanwendungen verwendet. Diese Materialien bieten eine hohe Effizienz und Stabilität unter extremen Bedingungen.

In einer Ausführungsform wird vorgeschlagen, dass der DC/DC-Wandler dazu eingerichtet ist, die ausgangsseitige Gleichspannung auf einem konstanten, insbesondere (vor-) einstellbaren bzw. wählbaren, Spannungsniveau an die Leistungselektronik bereitzustellen.

Der DC/DC-Wandler ist also vorzugsweise so konzipiert, dass er eine ausgangsseitige Gleichspannung auf einem konstanten Spannungsniveau bereitstellt, welches insbesondere einstellbar ist, um die spezifischen Anforderungen der Leistungselektronik zu erfüllen. Dies bedeutet, dass die Ausgangsspannung stabil bleibt, selbst bei Schwankungen der Eingangsspannung oder der Lastbedingungen, was für eine zuverlässige und konsistente Leistung sorgt. Zusätzlich ist die Leistungselektronik so nicht auf eine feste Eingangsspannung fixiert. Im Betrieb kann so beispielsweise ein Turbo-Modus realisiert werden, bei dem die Leistungselektronik, insbesondere temporär, eine höhere Gleichspannung durch den DC/DC-Wandler bereitgestellt bekommt. Umfasst die Antriebseinheit einen Akku, der als Spannungsquelle dient, können durch den DC/DC-Wandler auch Spannungsschwankungen des Akkus, die durch die Entladung bedingt sind, kompensiert werden, sodass unabhängig von einem aktuellen Niveau der Eingangsspannung die Ausgangsspannung mit einem konstanten Spannungsniveau an die Leistungselektronik bereitgestellt werden kann. So muss die Leistungselektronik nicht mehr auf die niedrigste Spannung des Akkus ausgelegt werden, sondern kann auch eine Spannung ausgelegt werden, bei der die Leistungselektronik und der elektrische Antrieb möglichst effizient arbeiten. Der Einsatz des DC/DC-Wandlers ermöglicht es somit, den optimalen Leistungspunkt der Leistungselektronik und des elektrischen Antriebs zu wählen und zu halten, wodurch die Leistungselektronik oder der elektrische Antrieb effizienter und verlustarmer arbeiten, selbst wenn die Eingangsspannung im Laufe des Betriebs aufgrund einer sukzessiven Akkuentladung absinkt. Die Ausgangsspannung kann vorzugsweise in Abhängigkeit der Eingangsspannung, insbesondere faktorisiert, eingestellt werden.

### KURZE BESCHREIBUNG DER FIGUREN

Die nachfolgende Beschreibung erläutert die Erfindung anhand von exemplarischen Ausführungsformen und Figuren. In den Figuren zeigt:
- Fig. 1: eine schematische Ansicht einer akkubetriebenen Handwerkzeugmaschine;
- Fig. 2: eine schematische Ansicht einer netzbetriebenen Handwerkzeugmaschine;
- Fig. 3: eine schematische Ansicht einer Antriebseinheit; und
- Fig. 4: ein schematisches Spannungs-Zeit-Diagramm.

Gleiche oder funktionsgleiche Elemente werden durch gleiche Bezugszeichen in den Figuren indiziert, soweit nicht anders angegeben.

### AUSFÜHRUNGSFORMEN DER ERFINDUNG

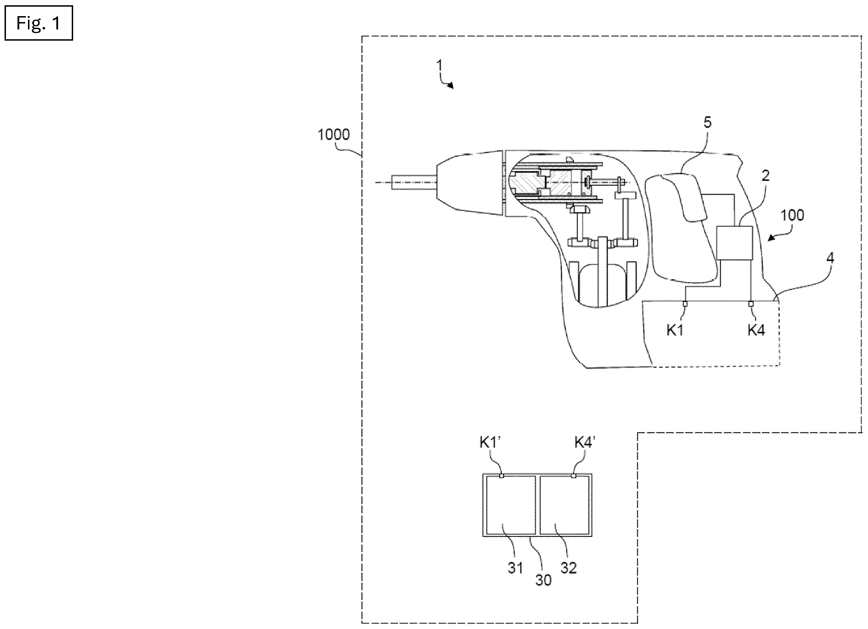

Fig. 1 zeigt eine schematische Ansicht einer akkubetriebenen Handwerkzeugmaschine 1, die hier als ein Schlagbohrer ausgeführt ist. Die Handwerkzeugmaschine 1 weist eine Aufnahmebucht 4 auf, die in diesem Beispiel zwei Kontakte K1, K4 aufweist. Die Aufnahmebucht 4 ist zum Aufnehmen einer Akkueinheit 30 eingerichtet. In jedem Fall werden die zwei Kontakte K1, K4 der Aufnahmebucht 4 mit zwei korrespondierenden Kontakten K1', K4' der Akkueinheit 30 in Kontakt gebracht.

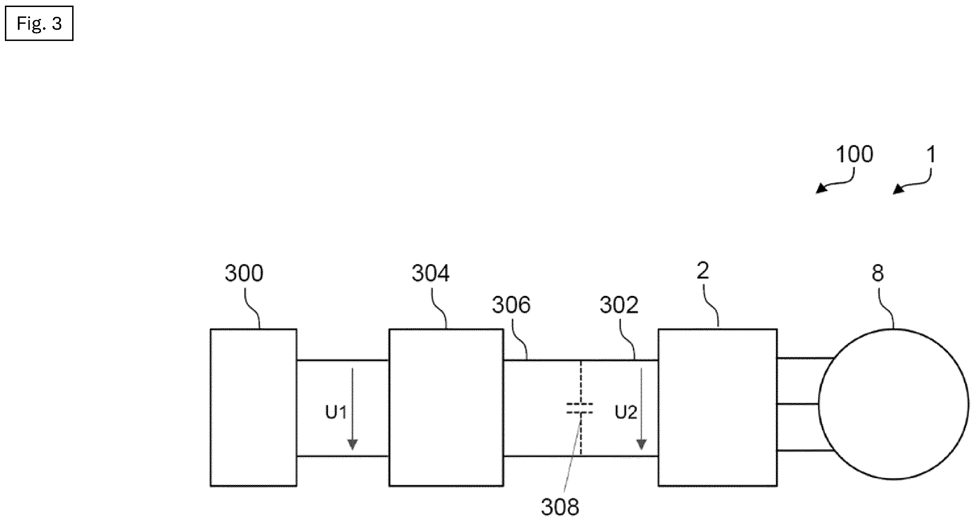

Zwischen den Kontakten K1 und K4 der Aufnahmebucht 4 ist ein Verbraucher der Handwerkzeugmaschine 1 geschaltet, insbesondere ein Elektromotor (in Fig. 1 ohne Bezugszeichen). In dem dargestellten Beispiel sind die Kontakte K1 und K4 mit einer Leistungselektronik 2 verbunden, welche den Antriebsstrom für den Elektromotor schaltet. Die Leistungselektronik 2 und der Elektromotor bilden einen Teil einer elektrischen Antriebseinheit 100, die gemäß einem Ausführungsbeispiel detailliert in Fig. 3 gezeigt ist.

Mit dem gestrichelten Kasten ist in der Fig. 1 rein beispielhaft ein System 1000 umfassend eine akkubetriebene Handwerkzeugmaschine 1 und eine Akkueinheit 30 mit mehreren Zellenanordnungen 31, 32 gekennzeichnet.

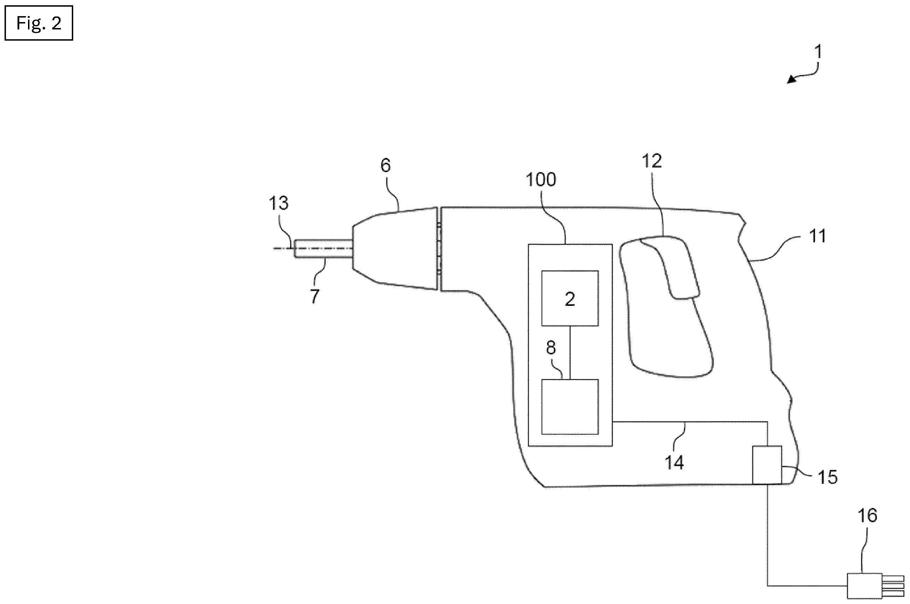

Fig. 2 zeigt eine schematische Ansicht eines weiteren Beispiels einer elektrischen Handwerkzeugmaschine 1, die beispielhaft als eine Bohrmaschine ausgebildet ist. Die Handwerkzeugmaschine 1 hat eine Werkzeugaufnahme 6, in welcher als ein Bohrwerkzeug 7 ein Bohrer eingesetzt ist. Ein Antrieb der Handwerkzeugmaschine 1 ist ein Elektromotor 8. Ein Bediener kann die Handwerkzeugmaschine 1 mittels eines Handgriffs 11 führen und mittels eines Tasters 12 in Betrieb nehmen. Im Betrieb dreht die Handwerkzeugmaschine 1 das Bohrwerkzeug 7, insbesondere, kontinuierlich um eine Arbeitsachse 13 und kann dabei das Bohrwerkzeug 7 längs der Arbeitsachse 13 in einen Untergrund hineinbohren.

Die Handwerkzeugmaschine 1 weist in Fig. 2 ein Ausführungsbeispiel der elektrischen Antriebseinheit 100 auf. Die elektrische Antriebseinheit 100 (siehe Ausführungsbeispiel in Fig. 3) umfasst einen Elektromotor 8 und die Leistungselektronik 2 zum Ansteuern des Elektromotors 8. Die elektrische Antriebseinheit 100 ist beispielhaft über eine elektrische Leitungsanordnung 14 mit einem Anschlussterminal 15 gekoppelt, welches mittels eines Steckers 16 mit einem Stromnetz (nicht gezeigt) gekoppelt werden kann. Alternativ kann die Handwerkzeugmaschine 1 auch über einen Akkumulator (wie in Fig. 1 gezeigt) mit Strom versorgt werden. Ein Antriebsstrang der Handwerkzeugmaschine 1 umfasst beispielsweise auch eine Antriebswelle und ein Getriebe zwischen dem Elektromotor 8 und der Antriebswelle (nicht gezeigt). Das Getriebe (nicht gezeigt) kann beispielsweise eine Drehzahl des Elektromotors 8 auf eine gewünschte Drehzahl des Bohrwerkzeuges 7 anpassen.

Fig. 3 zeigt ein Ausführungsbeispiel der Antriebseinheit 100 der Handwerkzeugmaschine 1 im Detail. Die Antriebseinheit 100 umfasst eine Spannungsquelle 300. Die Spannungsquelle 300 kann am Beispiel von Fig. 1 durch die zwischen den Kontakten K1 und K4 bereitgestellte Spannung ausgebildet sein. Die Spannungsquelle 300 kann am Beispiel von Fig. 2 alternativ durch das Anschlussterminal 15 ausgebildet sein, wobei in einem solchen Fall das Anschlussterminal 15 vorzugsweise einen AC/DC-Wandler (nicht gezeigt) umfassen kann, um eine netzseitige, über den Stecker 16 bereitgestellte Wechselspannung in eine Gleichspannung U₁ umzuwandeln.

Zum Bereitstellen einer stabilen, insbesondere schwankungsfreien, konstanten Gleichspannung U₂ an einer Eingangsseite 302 der Leistungselektronik 2 umfasst die Antriebseinheit 100 vorliegend einen DC/DC-Wandler 304, der in Parallelschaltung zwischen der Spannungsquelle 300 und der Leistungselektronik 2 angeordnet ist. Der DC/DC-Wandler 304 kann einen Buck-Wandler und/oder eine Boost-Wandler und/oder einen Buck-Boost-Wandler und/oder einen Cuk-Wandler und/oder einen SEPIC-Wandler und/oder einen Flyback-Wandler und/oder Push-Pull-Wandler aufweisen. Der DC/DC-Wandler 304 kann vorzugsweise mindestens einen halbleiterbasierten Schalter aufweisen, der ein Halbleitermaterial umfasst, das einen Bandabstand bzw. eine Bandlücke von mindestens 2 Elektronenvolt (eV) aufweist. Der DC/DC-Wandler 304 weist ferner eine Regelbandbreite von mindestens 80 kHz, vorzugsweise von mindestens 100 kHz auf, um derart schnelle Schaltintervalle zu ermöglichen, um derart die konstante bzw. geglättete Gleichspannung U₂ bereitzustellen.

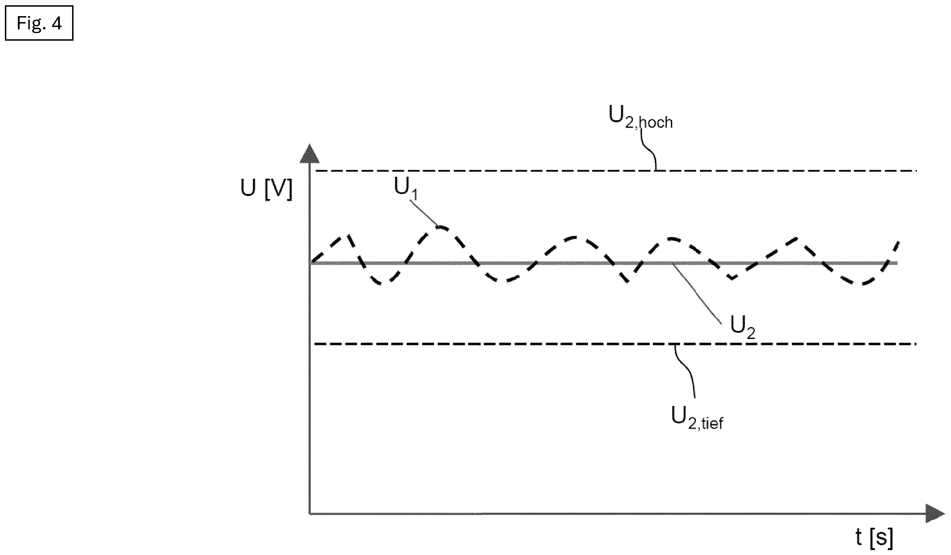

Vorzugsweise weist der DC/DC-Wandler 304 mindestens zwei Schalter auf (nicht gezeigt). Der DC/DC-Wandler 304 ist parallel zu der Spannungsquelle 300 und parallel zu der Leistungselektronik 2 geschaltet. Die von der Spannungsquelle 300 bereitgestellte Gleichspannung U₁ kann unter Umständen variieren (siehe Fig. 4), so dass nicht immer ein konstanter Spannungswert geliefert wird. Durch den DC/DC-Wandler 304 kann die Gleichspannung U₁ in den konstante Gleichspannung U₂ gewandet werden, die einen stabilen und zeitliche konstanten Spannungswert aufweist (siehe Fig. 4). Die Gleichspannung U₁ dient als Eingangsspannung für den DC/DC-Wandler 304 und wird in dem DC/DC-Wandler 304 in die konstante Gleichspannung U₂ gewandet. Der DC/DC-Wandler 304 stellt an einer Ausgangsseite 306 so die konstante Gleichspannung U₂ bereit. Rein optional kann zwischen dem DC/DC-Wandler 304 und der Leistungselektronik 2 mindestens ein Gleichstromkondensator 308 in Parallelschaltung angeordnet sein. Der Gleichstromkondensator 308 kann bevorzugt sein, um die konstante Gleichspannung U₂ weiter zu stabilisieren.

Fig. 4 zeigt schematisch ein Spannungs-Zeit-Diagramm. Dabei sind die Gleichspannungen U₁, U₂ über der Zeit t aufgetragen. Es ist erkennbar, dass die Gleichspannung U₁, die ausgangsseitig an der Spannungsquelle 300 bereitgestellt wird, über die Zeit t um einen mittleren Gleichspannungswert U_{M} variiert bzw. pendelt. Durch den DC/DC-Wandler 304 kann dieses Variieren "geglättet" werden, so dass an einer Ausgangsseite des DC/DC-Wandler 304 die konstante Gleichspannung U₂ bereitgestellt werden kann.

In Fig. 4 ist ferner gezeigt, dass der DC/DC-Wandler 304 dazu eingerichtet sein kann, die ausgangsseitige Gleichspannung U₂ auf einem konstanten, insbesondere (vor-) einstellbaren bzw. wählbaren, Spannungsniveau an die Leistungselektronik 2 bereitzustellen. Aus Fig. 4 geht dabei schematisch hervor, dass die ausgangsseitige Gleichspannung U₂ beispielsweise auf den mittleren Gleichspannungswert Unn der Gleichspannung U₁ ausgelegt sein kann. Es ist allerdings auch möglich, die ausgangsseitige Gleichspannung U₂ auf ein Niveau einzustellen, das oberhalb eines solchen mittleren Gleichspannungswerts U_{M} oder unterhalb eines solchen mittleren Gleichspannungswerts Unn liegt. Eine oberhalb eines solchen mittleren Gleichspannungswerts U_{M} liegende ausgangsseitige Gleichspannung U₂ ist mit U_{2,hoch} gekennzeichnet. Eine unterhalb eines solchen mittleren Gleichspannungswerts Unn liegende ausgangsseitige Gleichspannung U₂ ist mit U_{2,tief} gekennzeichnet.

### BEZUGSZEICHENLISTE

- 1: Handwerkzeugmaschine
- 2: Leistungselektronik
- 4: Aufnahmebucht
- 5: Hauptschalter
- 6: Werkzeugaufnahme
- 7: Bohrwerkzeug
- 8: Elektromotor
- 11: Handgriff
- 12: Taster
- 13: Arbeitsachse
- 14: Leitungsanordnung
- 15: Anschlussterminal
- 16: Stecker
- 19: Akkueinheit
- 20: Akkueinheit
- 30: Akkueinheit
- 31: Zellenanordnung
- 32: Zellenanordnung
- 33: Zelle
- 100: Antriebseinheit
- 300: Spannungsquelle
- 302: Eingangsseite
- 304: DC/DC-Wandler
- 306: Ausgangsseite
- 308: Gleichstromkondensator
- 1000: System
- K1: Kontakt
- K1': Kontakt
- K4: Kontakt
- K4': Kontakt
- U₁: Gleichspannung bzw. Eingangsspannung
- U₂: Gleichspannung bzw. Ausgangsspannung
- U_{2,tief}: Gleichspannung
- U_{2,hoch}: Gleichspannung
- U_{M}: mittlerer Gleichspannungswert
- t: Zeit

## Patentansprüche

1. Antriebseinheit (100) für eine Handwerkzeugmaschine (1), aufweisend:
eine Spannungsquelle (300);
einen DC/DC-Wandler (304), der parallel zu der Spannungsquelle (300) verschaltet und dazu eingerichtet ist, eine von der Spannungsquelle (300) bereitgestellte eingangsseitige Gleichspannung (U₁) in eine ausgangsseitige, insbesondere geglättete, Gleichspannung (U₂) umzuwandeln;
eine Leistungselektronik (2), die parallel zu der Spannungsquelle (300) und dem DC/DC-Wandler (304) geschaltet ist und durch die ausgangsseitige Gleichspannung (U₂) betreibbar ist; und einen Elektromotor (8), der mit der Leistungselektronik (2) verschaltet ist, wobei die Leistungselektronik (2) dazu ausgebildet ist, den Elektromotor (8) auf Basis der ausgangsseitigen Gleichspannung (U₂) zu steuern und/oder anzutreiben.

2. Antriebseinheit (100) nach Anspruch 1, wobei der DC/DC-Wandler (304) einen Buck-Wandler und/oder eine Boost-Wandler und/oder einen Buck-Boost-Wandler und/oder einen Cuk-Wandler und/oder einen SEPIC-Wandler und/oder einen Flyback-Wandler und/oder Push-Pull-Wandler und/oder ein eine aktive H-Brücke umfassenden DC/DC-Wandler aufweist.

3. Antriebseinheit (100) nach Anspruch 1 oder 2, wobei die Antriebseinheit (100) mindestens einen Gleichstromkondensator (308) aufweist, der zwischen dem DC/DC-Wandler (304) und der Leistungselektronik (2) angeordnet ist, und in Parallelschaltung mit dem DC/DC-Wandler (304) und der Leistungselektronik (2) verschaltet ist.

4. Antriebseinheit (100) nach einem der Ansprüche 1 bis 3, wobei die Spannungsquelle (300) durch mindestens zwei Kontakte (K1-K4), die mit mindestens einer Akkueinheit (19, 20, 30) verbindbar sind, bereitgestellt ist.

5. Antriebseinheit (100) nach einem der Ansprüche 1 bis 3, wobei die Spannungsquelle (300) ein Anschlussterminal (15) aufweist, das einen AC/DC-Wandler umfasst, der dazu eingerichtet ist, eine netzseitige Wechselspannung in eine Gleichspannung (U₁) umzuwandeln.

6. Antriebseinheit (100) nach einem der Ansprüche 1 bis 5, wobei der DC/DC-Wandler (304) eine Regelbandbreite von mindestens 80 kHz, vorzugsweise von mindestens 100 kHz aufweist.

7. Antriebseinheit (100) nach einem der Ansprüche 1 bis 6, wobei der DC/DC-Wandler (304) mindestens einen halbleiterbasierten Schalter aufweist, der ein Halbleitermaterial umfasst, das einen Bandabstand bzw. eine Bandlücke von mindestens 2 Elektronenvolt aufweist.

8. Antriebseinheit (100) nach einem der Ansprüche 1 bis 7, wobei der DC/DC-Wandler (304) dazu eingerichtet ist, die ausgangsseitige Gleichspannung (U₂) auf einem konstanten, insbesondere einstellbaren, Spannungsniveau an die Leistungselektronik (2) bereitzustellen.

9. Handwerkzeugmaschine (1) mit einer Antriebseinheit (100) nach einem der Ansprüche 1 bis 8.

10. System (1000) mit einer Handwerkzeugmaschine (1) nach Anspruch 9, einer Akkueinheit (19, 20, 30) und mit einer Ladevorrichtung zum Laden der Akkueinheit (19, 20, 30).
